# EUROPEAN PATENT SPECIFICATION

(11) **EP 3 889 075 B1**
(45) Date of publication and mention of the grant of the patent: **28.08.2024**
(21) Application number: 20167980.0
(22) Date of filing: 03.04.2020
(51) Int. Cl.: B65G 1/04, B65G 1/137

(54) **A LOAD CRANE FOR USE IN AN AUTOMATED WAREHOUSE**
LASTKRAN ZUR VERWENDUNG IN EINEM AUTOMATISIERTEN LAGER
GRUE DE CHARGEMENT DESTINÉE À ÊTRE UTILISÉE DANS UN ENTREPÔT AUTOMATISÉ

(43) Date of publication of application: 06.10.2021
(73) Proprietor: Texo AB, 343 24 Älmhult (SE)
(72) Inventor: Lindblom, Bo, 283 36 Osby (SE)
(74) Representative: Hansson Thyresson AB

(56) References cited:
- DE-A1- 102018 117 096
- JP-A- 2001 261 126
- US-A1- 2004 165 974
- US-A1- 2008 226 432
- US-B2- 7 329 081

## Description

### TECHNICAL FIELD

The present invention relates to a load crane for use in an automated warehouse and an automated warehouse comprising such load crane.

### BACKGROUND

A load crane can be used to convey goods in an automated warehouse in which goods are stored on a plurality of storage shelves arranged in parallel in the vertical and horizontal directions. The goods can be containers, boxes, cartons and trays and other similar objects. It is common that the load crane travels in an aisle on a track provided along the storage shelves, and by using a driving device to raise and lower a cage, goods can be transferred between arbitrary levels of the storage shelves.

Normally, some storage spaces need to be left free on some shelves, so as to allow goods, such as boxes or cartons, to be re-arranged when goods are not directly available in a storage shelf. As a result, the warehouse is not used in the most efficient way.

Most often, every aisle in the warehouse is provided with a separate load crane. Thus, it is preferred that the cranes are made light weight in order to reduce material costs, transportation cost when assembling the warehouse and driving cost associated with the propulsion of the cranes.

From the above it is understood that there is room for improvements and the invention aims to solve or at least mitigate the above and other problems.

US 2004/0165974 A1 discloses an automated storage plant with a transelevator device according to the preamble of claim 1.

### SUMMARY

The invention is defined by the appended independent claims. Additional features and advantages of the concepts disclosed herein are set forth in the description which follows, and in part will be obvious from the description, or may be learned by practice of the described technologies. The features and advantages of the concepts may be realized and obtained by means of the instruments and combinations particularly pointed out in the appended claims. These and other features of the described technologies will become more fully apparent from the following description and appended claims, or may be learned by the practice of the disclosed concepts as set forth herein.

In a first aspect a load crane for use in an automated warehouse is provided. The automated warehouse has a plurality of rows, which extend vertically in a plurality of levels, and are arranged in parallel in a horizontal direction to form a rack. The load crane comprises a pair of spaced apart vertical struts and a goods support arrangement connected to the vertical struts and comprising a number of levels for intermediate storage of goods. The load crane further comprises an elevator unit movably arranged along the vertical struts and configured to be stopped at different levels in line with the levels of the rack and with the levels of the goods support arrangement. The load crane also comprises a suspension unit configured to suspend the load crane above floor level in the automated warehouse.

This load crane is advantageous in that it has a suspension unit. Thus, it is configured to be suspended above floor level, which has the advantage of not requiring any rails or tracks mounted in the floor. No impact on the floor is thus required. Rails or tracks in the floor take up valuable space. The load crane allows this space to be used for intermediate storage instead. If the automated warehouse is to be expanded, or rebuilt, this is easy since the suspension of the load crane is integrated in the racks of the warehouse, no rails or tracks need to be detached from the floor and reinstalled somewhere else.

Traditional load cranes are delivered to a warehouse in one piece. This often requires an opening to be made in the roof, in order to get the load crane into the building. This load crane is instead delivered in sections, to be assembled into a complete load crane at the site.

The weight of the load crane is lower compared to traditional load cranes. This is due to that a traditional load crane needs a lot of stabilizing means which add to the weight. The weight of the load crane is configured to be distributed on the racks of the automated warehouse. Thus, fewer stabilizing means are required, which makes the load crane lighter. Both due to the suspension of the load crane and due to the lighter weight, there is no need for reinforcement of the floor, which is required for traditional load cranes.

The lower weight of the load crane compared to traditional load cranes results in a lower energy consumption for driving of the load crane.

In one embodiment, the suspension unit comprises roller means configured to movably support the load crane against support beams arranged along a transport aisle of the automated warehouse. Roller means is an advantageous way of transporting the load crane within the automated warehouse.

Preferably, the suspension unit further comprises a drive unit configured to relocate the load crane within the automated warehouse. This is an effective way of controlling the load crane.

The drive unit may be a belt drive unit, comprising a drive belt and a motor. This is an efficient way of controlling the load crane. The belt drive unit has an advantage in providing shorter braking distance compared to traditional load cranes, which allows higher speeds for the crane, and thus shorter driving times and a more efficient warehouse.

In one embodiment, the suspension unit comprises two longitudinal beams and two transverse beams attached to end portions of the longitudinal beams, wherein the longitudinal beams are configured to extend in a direction of a transport aisle of the automated warehouse. This provides for a stable suspension unit, which is configured to distribute the weight of the load crane over a portion of the rack of the automated warehouse. It is also configured to stabilize the load crane such in order to prevent it from tipping over.

Preferably, the roller means are provided on the longitudinal beams of the suspension unit. This is advantageous since the longitudinal beams preferably extend in a direction of a transport aisle of the warehouse.

In one embodiment, the suspension unit is arranged at a middle portion of the vertical struts. This enhances the equilibrium of the suspended load crane. The load crane is configured to be arranged such that an equal amount of weight is provided above as below the suspension unit. The weight distribution stabilizes the load crane such that it does not fall over when braking or accelerating. There is no need for additional stabilizers to prevent the load crane from tipping over

The goods support arrangement may comprise two vertical struts and a number of transverse rail sections configured to support a shuttle to be transferred into the racks of the automated warehouse and to transport goods to and from the racks and the load crane, respectively. The goods storage device comprising several levels is advantageous in that the load crane can carry multiple pieces of goods into and out of the warehouse, and intermediately store goods when rearrangement of goods is required.

Preferably, each level of the goods support arrangement comprises a pair of transverse rail sections. This is advantageous since corresponding rail sections preferably are provided in the racks of the warehouse, and on the elevator unit of the load crane. The rail portions are configured to support the shuttle configured to transport goods.

In a second aspect, an automated warehouse comprising at least one load crane according to the above is provided. Advantages provided by this warehouse is e.g. that it is easy to install, and more effective due to a higher speed of the load crane and more efficient material handling due to the goods storage arrangement.

### BRIEF DESCRIPTION OF THE DRAWINGS

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
- Fig. 1: is a schematic top view of an automated warehouse,
- Fig. 2: is a schematic perspective view of a load crane for use in the automated warehouse of Fig. 1,
- Fig. 3: is a schematic perspective view of the load crane in Fig. 2,
- Fig. 4: is a schematic perspective view of the load crane in Fig. 2 with a crane displacement device,
- Fig. 5: is a detail view of the load crane in Fig. 4, and
- Fig. 6: is a perspective view of a driving mechanism of the load crane.
- Fig. 7: is a perspective detail view of the driving mechanism in Fig. 6,
- Fig. 8: is a perspective side view of the load crane to be inserted into the automated warehouse;
- Fig. 9: is a perspective side view of the load crane installed in the automated warehouse;
- Fig. 10: is a schematic side view of a shuttle that can be carried by the load crane,
- Fig. 11: is a schematic top view with partly cut off portions of the shuttle in Fig. 10,
- Fig. 12: is a schematic side view showing a support beam supporting the shuttle,
- Fig. 13: is a schematic perspective view of the automated warehouse of Fig. 1 where the load crane is supporting a shuttle moving into the warehouse, and
- Fig. 14: is a schematic perspective view of the automated warehouse where the shuttle is moving goods picked up in the warehouse onto the load crane.

Further, in the figures like reference characters designate like or corresponding parts throughout the several figures.

### DETAILED DESCRIPTION

Various embodiments of the disclosed methods and arrangements are discussed in detail below. While specific implementations are discussed, it should be understood that this is done for illustration purposes only. A person skilled in the relevant art will recognize that other components, configurations, and steps may be used without parting from the scope of the invention as set forth in the appended claims.

In the description and claims the word "comprise" and variations of the word, such as "comprising" and "comprises", does not exclude other elements or steps.

Hereinafter, certain embodiments will be described more fully with reference to the accompanying drawings. It will be apparent to those skilled in the art that various modifications and variations can be made without departing from the inventive concept. Other embodiments will be apparent to those skilled in the art from consideration of the specification and practice disclosed herein. The embodiments herein are provided by way of example so that this disclosure will be thorough and complete, and will fully convey the scope of the inventive concept, and that the claims be construed as encompassing all equivalents of the present inventive concept which are apparent to those skilled in the art to which the inventive concept pertains. If nothing else is stated, different embodiments may be combined with each other.

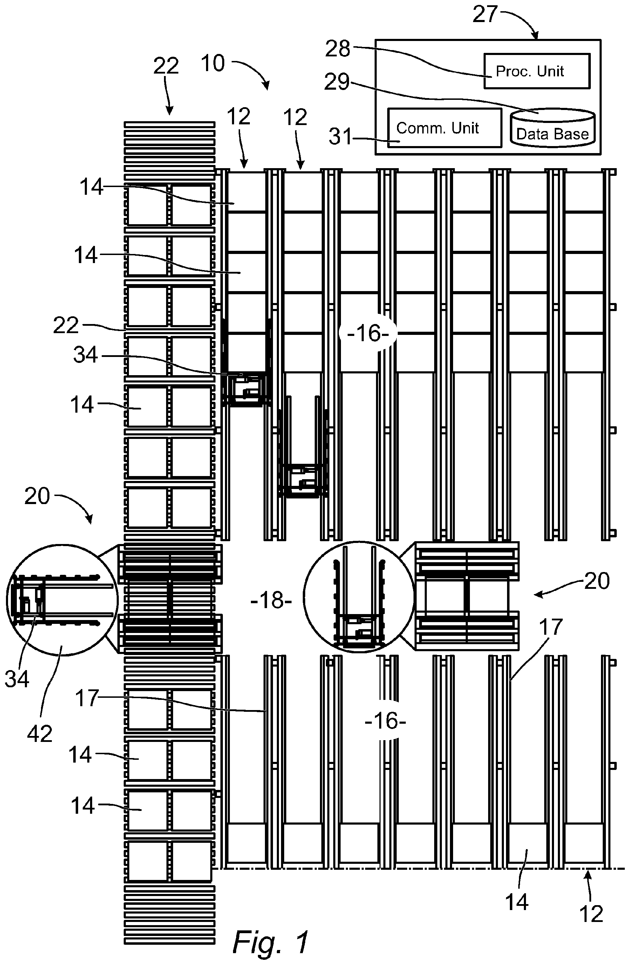

Fig. 1 shows an automated warehouse 10 with a plurality of rows 12 with storage locations for goods 14 on shelves. The rows 12 extend vertically in a plurality of levels and in parallel in a horizontal direction to form a rack 16. A transport aisle 18 extends perpendicular to the rows between two opposite racks 16. Goods are e.g. transported to and from the racks 16 by a conveyor 22. In the embodiment shown in Fig. 1, the conveyor 22 is provided below an outer and lowest section of the racks 16. In various embodiments, the conveyor 22 is provided at other levels and/or at other locations in relation to the racks. In yet another embodiment, the goods 14 are transported in any other suitable way, e.g. by means of a truck or trolley.

A load crane 20 is arranged to move back and forth along the transport aisle 18. A shuttle 34 can be supported by a rotating support 42 that is arranged on the load crane 20 and can also move into and out from the rows carrying goods 14. The goods 14 is supported on storage tracks 17 in the racks 16.

The load crane 20 is controlled by a central control unit 27 comprising a processing unit 28, a data base unit 29, and a communication unit 31. A similar control unit referred to as a crane control unit 33 is provided on the load crane 20. The central control unit 27 communicates with the crane control unit 33 through the communication unit 31 and a similar communication device in the crane control unit 33. Preferably, all communication is done with wireless communication, such as different radio systems. Data relating to positions of all goods stored in the automated warehouse and to goods specific information are stored and continuously updated in the database unit 29 by the processing unit 28.

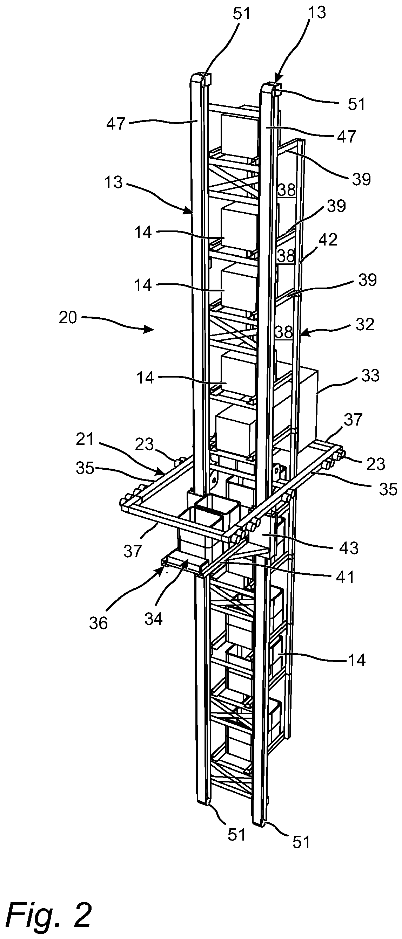

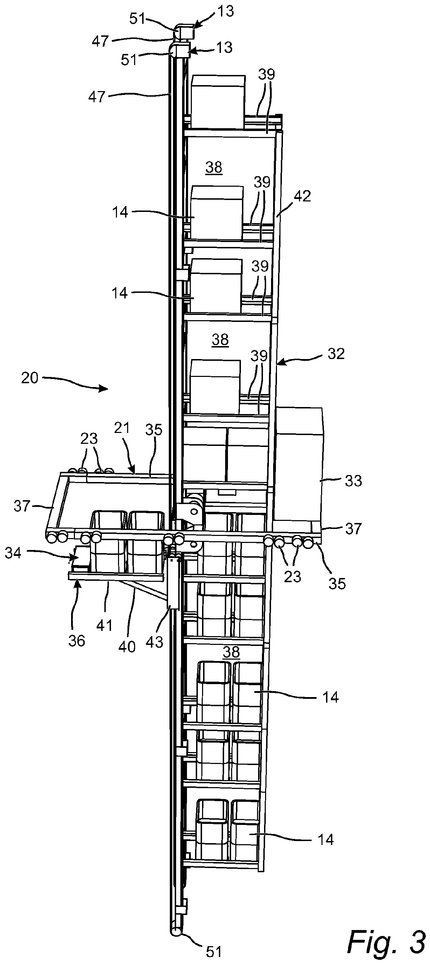

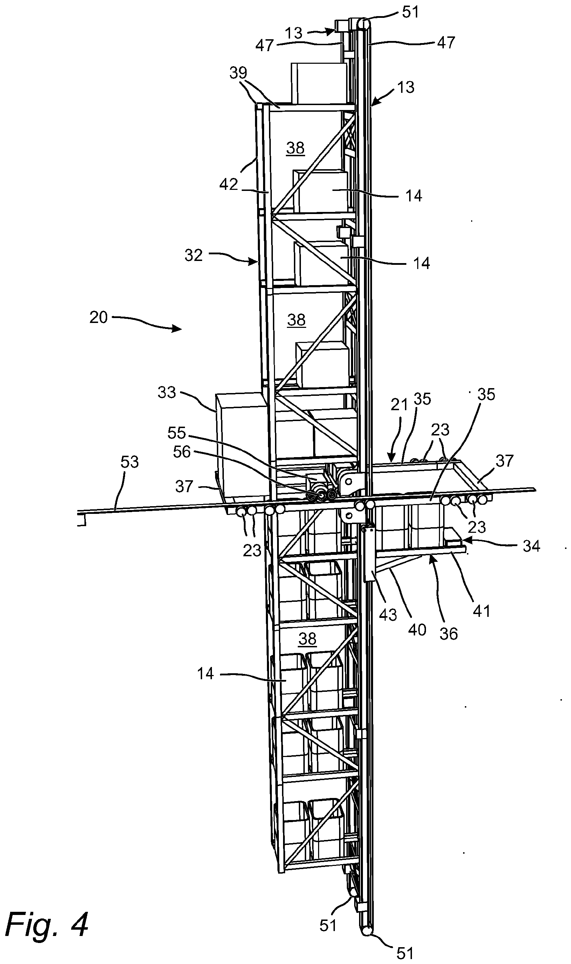

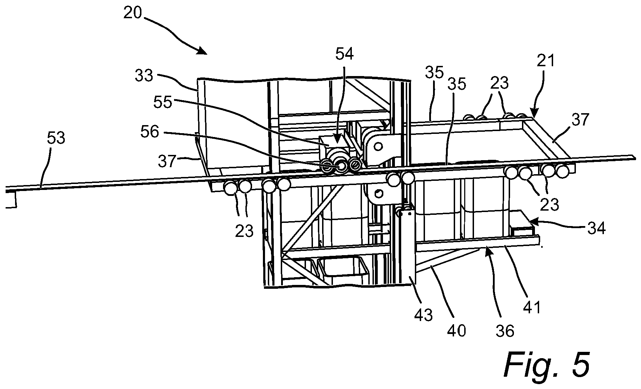

With reference to Fig. 2 to Fig. 7, embodiments and applications of the disclosed load crane 20 are shown. The load crane 20 extends vertically and is approximately as high as the racks 16. It comprises a pair of spaced apart vertical struts 13 and a goods support arrangement 32.

The goods support arrangement 32 comprises two vertical struts 42. Each vertical strut 42 is arranged in parallel and spaced apart from respective vertical struts of 13 of the load crane 20. One of the vertical struts 42 of the goods support arrangement 32 is connected to one of the vertical struts 13 of the load crane 20, and the other vertical strut 42 of the goods support arrangement 32 is connected to the other of the vertical struts 13 of the load crane 20 by means of rail sections 39. Each pair of rail sections 39 form a level 38 for intermediate storage of goods 14. The rail sections 39 are configured to house goods 14, and to support the shuttle 34 which is configured to travel along the rail sections 39 when collecting goods 14 from or loading goods 14 into the goods support arrangement 32.

The crane 20 further comprises an elevator unit 36 movably arranged along the vertical struts 13, and configured to be stopped at different levels in line with the levels of the rack 16 and with the levels 38 of the goods support arrangement 32. The elevator unit 36 comprises at least one elevator track section 52 configured to support the shuttle 34.

The elevator unit 36 comprises a shuttle support 41 configured to support the shuttle 34 when the elevator unit 36 moves up and down in front of a row 12 in the rack 16. The shuttle support 41 also supports the shuttle 34 during placement of goods 14 in and removing goods 14 from the goods support arrangement 32 of the load crane 20. The elevator unit 36 also comprises a lift cage 40 connected to a set of elevator endless belts 47, and a rotating support 42. The rotating support 42 is provided with track sections 52 on which the shuttle is configured to run along. The elevator endless belts 47 are supported and driven by drive wheels 51 arranged at a top section of the load crane 20 and at a bottom section, respectively.

After placing goods at one level in the goods support arrangement 32, further goods 14 can be picked up from the same level of the rack 16 or from another level after activating the elevator unit 36. If no change of level is required, another box or any other type of goods will be picked up by the shuttle 34. The shuttle 34 is then moved back to the elevator unit 36. If required, the elevator unit 36 can be activated and the picked-up goods 14 can be moved by the shuttle 34 into the goods support arrangements 32 at a level 38 where there is space available after rotation of the rotating support 42 90 degrees.

The lift cage 40 is guided by vertically arranged sleeves 43. The sleeves 43 are arranged at least partly around each vertical strut 13 and are connected to the elevator unit 36 via one or more of the lift cage 40 and/or the shuttle support 41. The endless belts 47 are either arranged within the sleeves 43, or connected to the sleeves 43, in order to control and guide the endless belts 47 in a sideway direction. Such an arrangement will stabilize the lift cage 40 when the elevator endless belts 47 moves up and down.

In various embodiments, the elevator endless belts 47 are rubber block chains with a plurality of tooth-like interconnected blocks. The blocks will allow fastening of the lift cage 40 to the elevator endless belts 47.

The load crane 20 also comprises a suspension unit 21 configured to suspend the load crane 20 above floor level. The suspension unit 21 comprises two longitudinal beams 35 and two transverse beams 37. The transverse beams 37 are attached to end portions of the longitudinal beams 35 such that a rectangular shape is formed. The suspension unit 21 is arranged as a horizontal frame within which the two vertical struts 13 are arranged. The rectangle formed by the longitudinal beams 35 and transverse beams 37 is formed such that the elevator unit 36 may pass therethrough when it moves up and down along the load crane 20. When the load crane 20 is arranged in a warehouse 10 transport aisle 18, the longitudinal beams 35 extend in the direction of the transport aisle 18. The suspension unit 21 is arranged approximately around a middle section of the vertical struts 13. However, in other embodiment, the suspension unit 21 may be arranged higher or lower in relation to the height of the vertical struts 13.

The longitudinal beams 35 of the suspension unit 21 are provided with a plurality of roller means 23. The number of roller means 23 may differ between embodiments, but in the depicted embodiment, the suspension unit 21 is provided with twenty roller means 23, arranged in groups of two. Five such groups of roller means 23 are provided along each longitudinal beam 35.

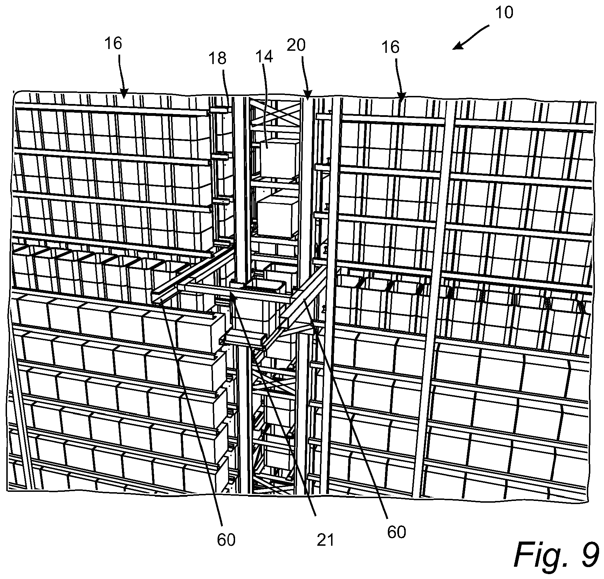

The roller means 23 are configured to movably support the crane 20 against support beams 60 arranged along each transport aisle 18. As best seen in Fig. 9, the support beams 60 are U-beams with a first leg and a second leg, the legs being arranged horizontally, and a vertical web interconnecting the two legs. The support beams 60 are arranged such that the web is facing away from the transport aisle 18. Thus, the open portion of the U-beam is facing the transport aisle 18, providing an upper surface of the lower leg of the U-beam for the roller means 23 to abut. An upper surface of the upper leg of the U-beam is provided to support a drive unit 54 of the load crane 20. This will be further explained below.

Thus, when arranged in an automated warehouse, the load crane 20 is being supported by the support beams 60 by means of the roller means 23 of the suspension unit 21, and it is suspended in such a way that it is arranged above floor level. No rails or similar are arranged on the floor for guiding or supporting the load crane.

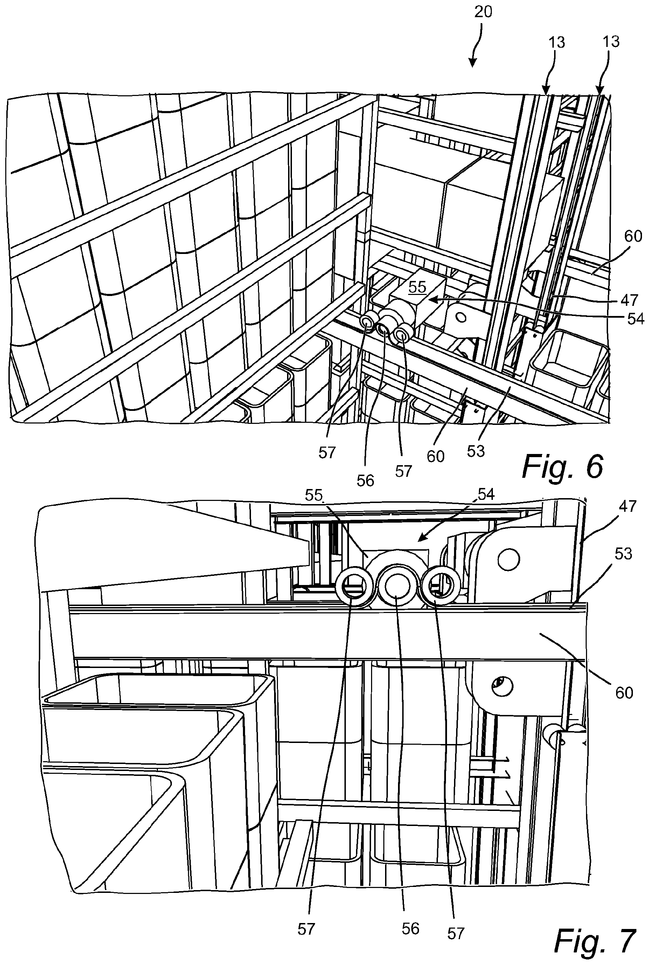

The suspension unit 21 further comprises a drive unit 54, which is shown in Figs 6 and 7, configured to relocate the crane 20 within the automated warehouse 10. The drive unit 54 is in the depicted embodiment a belt drive unit comprising a single drive belt 53, a motor 55 and three wheels: two deflecting wheels, or pulley wheels 57, and a drive wheel 56, arranged between the two pulley wheels 57. As is best seen in Fig. 7, the drive belt 53 is arranged below the first pulley wheel 57, above the drive wheel 56 and below the second pulley wheel 57. When the motor 55 is controlled to rotate the drive wheel 56 arranged in the middle, the load crane 20 will be moved along the support beams 60 arranged along the aisle 18.

In various embodiments, the drive belt 53 is a toothed belt, a cog belt, a gear rod or any other suitable drive means.

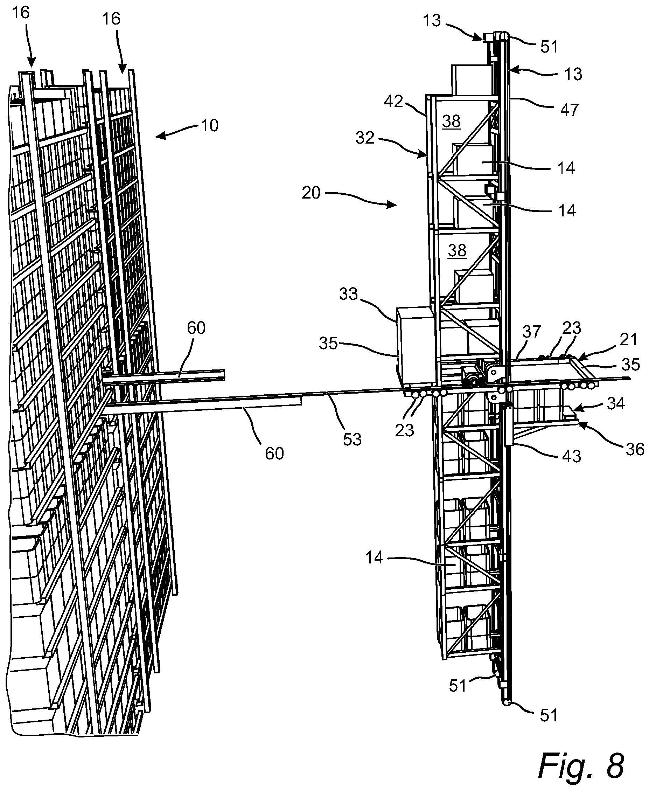

Figs 8 and 9 shows the load crane 20 in connection with the automated warehouse 10. In Fig. 8, the load crane 20 is shown outside the racks 16 of the warehouse 10. The support beams 60 are extended outside the rack 16 for visual purposes, in order to make clear where the load crane 20 is to be inserted. The drive belt 53 of the drive unit 54 extends on top of the upper leg of the U-shaped support beam 60. The roller means 23 of the suspension unit 21 are arranged to be inserted into the open portion of the U-shaped support beam 60, between the upper and the lower leg of the U-shaped support beam 60.

In Fig. 9, the load crane 20 is arranged in the transport aisle 18 between two racks 16. The load crane 20 is suspended on the support beams 60 by means of the suspension unit 21. The

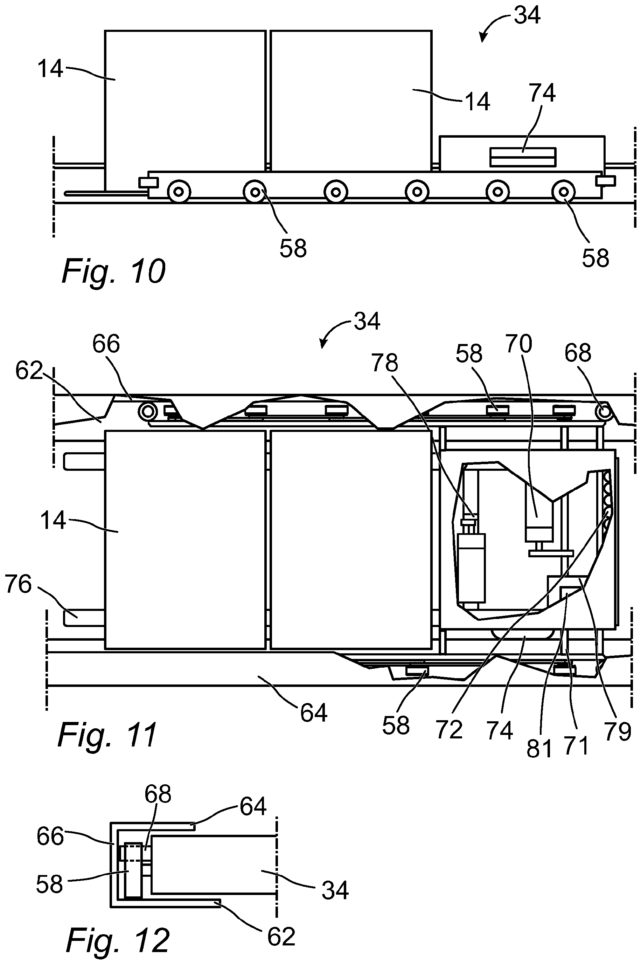

One embodiment of the shuttle 34 designed to pick up, support and place goods 14 in the automated warehouse 10 is shown in Figs 10 and 11. The shuttle 34 runs on a plurality of support wheels 58 that will run on the elevator track sections 52 , on the storage tracks 17 in the racks 16, and on the rail sections 39 of the goods storage arrangement 32. The storage tracks 17, the elevator track sections 52, and the rail sections 39 are support beams with a laying U-shape arranged with a lower horizontal flange 62, an upper horizontal flange 64, and a vertical web 66, c.f. Fig. 12. The upper flange 64 extends a shorter distance from the web 66 than does the lower flange 62. The shuttle 34 is guided on the support beams 60 by guide wheels 68 that engage the web 66 when the shuttle 34 runs along the support beams.

The shuttle 34 is propelled by an electric motor 70 which can be powered by a set of capacitors 72. The capacitors 72 are charged through a current collector 74 that engages a current path (not shown) in the load crane 20 when the shuttle 34 is positioned in the load crane 20. The electric motor 70 drives a shaft 71 connected to the support wheels 58. The shuttle 34 is provided with an elongated lift fork 76 that will support the goods 14 during transport. An onboard control device 79 comprising a wireless communication unit 81 controls the movements and actions of the shuttle 34, partly based on instruction signals transmitted from the crane control unit 33. In various embodiments, the wireless communication unit 81 communicates with the crane control unit 33 through a Bluetooth link.

The shuttle 34 is also provided with a lifting mechanism 78 for raising goods 14 above and lowering goods on the support beams or rails in the racks 16, on the elevator track sections 52, and on the rail sections 39 of the goods support arrangement 32 in the load crane 20.

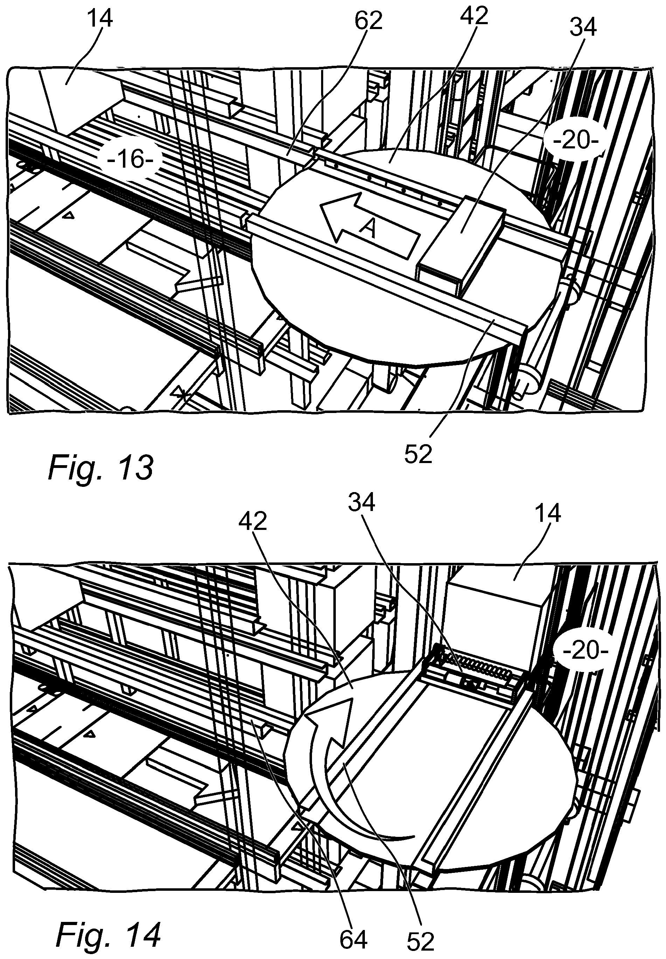

In Fig. 13 the shuttle 34 is positioned on the rotating support 42 in front of a storage level of the rack 16. The shuttle 34 will move in the direction of the arrow A into the rack 16 to pick up goods 14. Fig. 14 shows the shuttle 34 carrying goods 14 and moving into the load crane 20. In Fig. 14, the rotating support 42 has been rotated 90°, compared to the position in Fig. 13, before a movement of the shuttle 34 into the load crane 20 is initiated.

The goods support arrangement 32 of the load crane 20 can carry goods 14 on a plurality of levels 38. As a result, goods 14 can be stored intermediately on the load crane 20 during storing of goods in the automated warehouse as well as during unloading of goods. This will reduce the number of movements of the load crane 20, because the load crane 20 can remain in one position for receiving a plurality of containers or boxes and then move with all the goods stored in the multilayer elevator 30 to positions in the automated warehouse where the goods are transported by the shuttle 34 to selected positions in the racks. Goods 14 picked up by the shuttle 34 in the racks 16 can be placed at any level of the goods support arrangement 32 where there is free space. A suitable level is chosen by operating the elevator unit 36 correspondingly.

Now referring to the loading of the warehouse 10. Goods 14 from the conveyor 22 is picked up by the shuttle 34, and raised to a level 38 in the goods support arrangement 32 where there is free space. The goods 14 is deposited on the selected level 38 of the goods support arrangement 32. More goods 14 can then be picked up from the conveyor 22 and placed on other free levels 38. The number of levels occupied by goods in connection with loading and unloading of goods may depend on intended selected goods positions in the racks, so as to use the load crane 20 in an efficient way and reduce movements of the load crane 20.

When a desired set of goods 14 has been collected from the conveyor system and placed in the goods support arrangement 32, the load crane 20 will be moved along the support beams 60 by means of the drive unit 54 from the conveyor 22 with the goods 14 to a first position in front of a row 12 of the automated warehouse 10. Goods are picked up by the shuttle 34 from a selected level 38 in the goods support arrangement 32. The rotating support 42 is rotated 90 degrees, and the goods 14 will be placed at the selected level and position in the row of the automated warehouse. More goods then can be picked up from the goods support arrangement 32 by repeating this process. A reversed procedure is used for unloading of goods 14 from the automated warehouse 10.

The various embodiments described above are provided by way of illustration only and should not be construed to limit the invention set forth in the appended claims. Those skilled in the art will readily recognize various modifications and changes that may be made to the present invention without following the example embodiments and applications illustrated and described herein, and without departing from the scope of the appended claims.

## Claims

1. A load crane (20) for use in an automated warehouse (10) having a plurality of rows (12), wherein the rows (12) extend vertically in a plurality of levels, and are arranged in parallel in a horizontal direction to form a rack (16), the load crane (20) comprising
a pair of spaced apart vertical struts (13);
an elevator unit (36) movably arranged along the vertical struts (13), and configured to be stopped at different levels in line with the levels of the rack (16), and
a suspension unit (21) configured to suspend the load crane (20) above floor level in the automated warehouse (10),
**characterized in that** the load crane further comprises a goods support arrangement (32), connected to the vertical struts (13) and comprising a number of levels (38) for intermediate storage of goods (14), and
wherein the elevator unit (36) is further configured to be stopped at different levels in line with the levels (38) of the goods support arrangement (32).

2. The load crane according to claim 1, wherein the suspension unit (21) comprises roller means (23) configured to movably support the load crane (20) against support beams (60) arranged along a transport aisle (18) of the automated warehouse (10).

3. The load crane according to claim 1 or 2, wherein the suspension unit (21) further comprises a drive unit (54) configured to relocate the load crane (20) within the automated warehouse (10).

4. The load crane according to claim 3, wherein the drive unit (54) is a belt drive unit comprising a drive belt (53) and a motor (55).

5. The load crane according to any one of the preceding claims, wherein the suspension unit (21) comprises two longitudinal beams (35) and two transverse beams (37) attached to end portions of the longitudinal beams (35), wherein the longitudinal beams (35) are configured to extend in a direction of a transport aisle (18) of the automated warehouse (10).

6. The load crane according to claim 2 and 5, wherein the roller means (23) are provided on the longitudinal beams (35) of the suspension unit (21).

7. The load crane according to any one of claims 2-6, wherein the suspension unit (21) is arranged at a middle portion of the vertical struts (13).

8. The load crane according to any one of the preceding claims, wherein the goods support arrangement (32) comprises two vertical struts (42) and a number of transverse rail sections (39) configured to support a shuttle (34) to be transferred into the racks (16) of the automated warehouse (10) and to transport goods (14) to and from the racks (16) and the load crane (20), respectively.

9. The load crane according to claim 8, wherein each level (38) of the goods support arrangement (32) comprises a pair of transverse rail sections (39).

10. An automated warehouse (10) comprising at least one load crane (20) according to any one of the claims 1-9.

## Patentansprüche

1. Lastkran (20) zur Verwendung in einer automatisierten Lagerhalle (10), die eine Vielzahl von Reihen (12) aufweist, wobei sich die Reihen (12) vertikal in einer Vielzahl von Ebenen erstrecken und parallel in horizontaler Richtung angeordnet sind, um ein Gestell (16) auszubilden, der Lastkran (20) umfassend
ein Paar voneinander beabstandeter vertikaler Streben (13);
eine Aufzugseinheit (36), die entlang der vertikalen Streben (13) bewegbar angeordnet ist und konfiguriert ist, um auf verschiedenen Ebenen in Übereinstimmung mit den Ebenen des Gestells (16) angehalten zu werden, und
eine Aufhängungseinheit (21), die konfiguriert ist, um den Lastkran (20) über der Bodenebene in der automatisierten Lagerhalle (10) aufzuhängen,
**dadurch gekennzeichnet, dass** der Lastkran ferner eine Warenträgeranordnung (32) umfasst, die mit den vertikalen Streben (13) verbunden ist und umfassend eine Anzahl von Ebenen (38) für eine Zwischenlagerung von Waren (14), und
wobei die Aufzugseinheit (36) ferner konfiguriert ist, um auf verschiedenen Ebenen in Übereinstimmung mit den Ebenen (38) der Warenstützanordnung (32) angehalten zu werden.

2. Lastkran nach Anspruch 1, wobei die Aufhängungseinheit (21) Rollenmittel (23) umfasst, die konfiguriert sind, um den Lastkran (20) gegen die Stützbalken (60) bewegbar zu stützen, die entlang eines Transportgangs (18) der automatisierten Lagerhalle (10) angeordnet sind.

3. Lastkran nach Anspruch 1 oder 2, wobei die Aufhängungseinheit (21) ferner eine Antriebseinheit (54) umfasst, die konfiguriert ist, um den Lastkran (20) innerhalb der automatisierten Lagerhalle (10) zu versetzen.

4. Lastkran nach Anspruch 3, wobei die Antriebseinheit (54) eine Riemenantriebseinheit, umfassend einen Antriebsriemen (53) und einen Motor (55), ist.

5. Lastkran nach einem der vorstehenden Ansprüche, wobei die Aufhängungseinheit (21) zwei Längsträger (35) und zwei Querträger (37) umfasst, die an Endabschnitten der Längsträger (35) angebracht sind, wobei die Längsträger (35) konfiguriert sind, um sich in einer Richtung eines Transportgangs (18) der automatisierten Lagerhalle (10) zu erstrecken.

6. Lastkran nach Anspruch 2 und 5, wobei die Rollenmittel (23) an den Längsträgern (35) der Aufhängungseinheit (21) bereitgestellt sind.

7. Lastkran nach einem der Ansprüche 2 bis 6, wobei die Aufhängungseinheit (21) an einem Mittelabschnitt der vertikalen Streben (13) angeordnet ist.

8. Lastkran nach einem der vorstehenden Ansprüche, wobei die Warenträgeranordnung (32) zwei vertikale Streben (42) und eine Anzahl von Querschienenabschnitten (39) umfasst, die konfiguriert sind, um einen Shuttle (34) zu stützen, um in die Gestelle (16) der automatisierten Lagerhalle (10) verlagert zu werden, und Waren (14) jeweils zu und von den Gestellen (16) und dem Lastkran (20) zu transportieren.

9. Lastkran nach Anspruch 8, wobei jede Ebene (38) der Warenträgeranordnung (32) ein Paar Querschienenabschnitte (39) umfasst.

10. Automatisierte Lagerhalle (10), umfassend mindestens einen Lastkran (20) nach einem der Ansprüche 1 bis 9.

## Revendications

1. Grue de chargement (20) pour une utilisation dans un entrepôt automatisé (10) ayant une pluralité de rangées (12), dans laquelle les rangées (12) s'étendent verticalement sur une pluralité de niveaux et sont disposées en parallèle dans une direction horizontale pour former un rayonnage (16), la grue de chargement (20) comprenant
une paire d'entretoises verticales espacées (13) ;
une unité d'ascenseur (36) disposée de manière mobile le long des entretoises verticales (13), et configurée pour s'arrêter à différents niveaux correspondant aux niveaux du rayonnage (16), et
une unité de suspension (21) conçue pour suspendre la grue de chargement (20) au-dessus du niveau du sol dans l'entrepôt automatisé (10),
**caractérisée en ce que** la grue de chargement comprend en outre un agencement de support de marchandises (32), relié aux entretoises verticales (13) et comprenant un certain nombre de niveaux (38) pour un stockage intermédiaire de marchandises (14), et
dans laquelle l'unité d'ascenseur (36) est en outre conçue pour s'arrêter à différents niveaux correspondant aux niveaux (38) de l'agencement de support de marchandises (32).

2. Grue de chargement selon la revendication 1, dans laquelle l'unité de suspension (21) comprend des moyens de roulement (23) conçus pour supporter de manière mobile la grue de chargement (20) contre des poutres de support (60) disposées le long d'une allée de transport (18) de l'entrepôt automatisé (10).

3. Grue de chargement selon la revendication 1 ou 2, dans laquelle l'unité de suspension (21) comprend en outre une unité d'entraînement (54) conçue pour déplacer la grue de chargement (20) à l'intérieur de l'entrepôt automatisé (10).

4. Grue de chargement selon la revendication 3, dans laquelle l'unité d'entraînement (54) est une unité d'entraînement par courroie comprenant une courroie d'entraînement (53) et un moteur (55).

5. Grue de chargement selon l'une quelconque des revendications précédentes, dans laquelle l'unité de suspension (21) comprend deux poutres longitudinales (35) et deux poutres transversales (37) attachées à des parties d'extrémité des poutres longitudinales (35), dans laquelle les poutres longitudinales (35) sont conçues pour s'étendre dans une direction d'une allée de transport (18) de l'entrepôt automatisé (10).

6. Grue de chargement selon les revendications 2 et 5, dans laquelle les moyens de roulement (23) sont pourvus sur les poutres longitudinales (35) de l'unité de suspension (21).

7. Grue de chargement selon l'une quelconque des revendications 2 à 6, dans laquelle l'unité de suspension (21) est disposée au niveau d'un milieu des entretoises verticales (13).

8. Grue de chargement selon l'une quelconque des revendications précédentes, dans laquelle l'agencement de support des marchandises (32) comprend deux entretoises verticales (42) et un certain nombre de sections de rail transversales (39) conçues pour supporter un transporteur (34) à transférer dans les rayonnages (16) de l'entrepôt automatisé (10) et pour transporter des marchandises (14) vers et depuis les rayonnages (16) et la grue de chargement (20), respectivement.

9. Grue de chargement selon la revendication 8, dans laquelle chaque niveau (38) de l'agencement de support des marchandises (32) comprend une paire de sections de rail transversales (39).

10. Entrepôt automatisé (10) comprenant au moins une grue de chargement (20) selon l'une quelconque des revendications 1 à 9.
